# EUROPÄISCHE PATENTSCHRIFT

(11) **EP 0 492 132 B1**
(45) Veröffentlichungstag und Bekanntmachung des Hinweises auf die Patenterteilung: **06.03.1996**
(21) Anmeldenummer: 91119736.6
(22) Anmeldetag: 19.11.1991
(51) Int. Cl.: G01S 13/90

(54) **Verfahren zur digitalen Generierung von SAR-Bildern und Einrichtung zu dessen Durchführung**
Method for digitally generating SAR-images and apparatus for carrying out the method
Procédé pour générer de manière numérique des images-SAR et appareil pour exécuter le procédé

(30) Priorität: 27.11.1990 DE 4037725
(43) Veröffentlichungstag der Anmeldung: 01.07.1992
(73) Patentinhaber: Deutsche Forschungsanstalt für Luft- und Raumfahrt e.V., D-51126 Köln (DE)
(72) Erfinder: Moreira, Alberto, W-8031 Gilching (DE)
(74) Vertreter: von Kirschbaum, Albrecht, Dipl.-Ing.

(56) Entgegenhaltungen:
- US-A- 4 227 194
- US-A- 4 292 634
- IEEE 1980 INTERNATIONAL RADAR CONFERENCE, Arlington, Virginia, 28.-30. April 1980, SS. 153-160; C. WU: "A digital fast correlation approach to produce SEASAT SAR imagery"

## Beschreibung

Die Erfindung betrifft ein Verfahren zur digitalen Generierung von mittels eines von einem Träger mitgeführten, kohärenten Abbildungssystems erhaltenen SAR-Bildern nach dem Oberbegriff des Anspruchs 1 sowie eine Einrichtung zur Durchführung des Verfahrens nach dem Oberbegriff der Ansprüche 2 und 3.

Radar mit synthetischer Apertur (SAR) wird zur zweidimensionalen Abbildung der Erdoberfläche, von Planeten und Objekten benutzt. Die Abbildung mit SAR ist aufgrund einer Wetterunabhängigkeit und wegen eines möglichen Tag- und Nachteinsatzes sowie einer hohen geometrischen Auflösung sehr vorteilhaft. Allerdings ist eine sehr aufwendige Verarbeitung für eine Generierung eines SAR-Bildes notwendig, wobei zur Zeit nur wenig speziell ausgebildete Rechner eine Echtzeit-Verarbeitung mit hoher Bildqualität erreichen.

Im folgenden werden die Funktionsweise eines SAR-Systems sowie die notwendige Datenverarbeitung zur Generierung eines Bildes mit hoher Auflösung und Qualität erläutert. Ein SAR-System weist einen Träger, wie beispielsweise ein Flugzeug, einen Hubschrauber, einen Satelliten u.ä., welcher sich mit konstanter Geschwindigkeit bewegt, eine Antenne, deren Blickrichtung quer d.h. rechts oder links, zur Bewegungsrichtung ausgerichtet ist, und ein kohärentes Radarsystem auf, welches elektromagnetische Pulse periodisch sendet. Die rückgestreuten Radarechos werden empfangen, heruntergemischt, quadraturdemoduliert (im I- und Q-Kanal) digitalisiert und zur Generierung eines zweidimensionalen Bildes verarbeitet. Hierbei wird die Bewegungsrichtung als Azimut und die Richtung senkrecht hierzu als Entfernung bezeichnet; die Bandbreite des gesendeten Pulses bestimmt die Entfernungsauflösung. Eine hohe Entfernungsauflösung wird durch eine lineare Frequenzmodulation (eine Erhöhung der Bandbreite) ermöglicht. In diesem Fall ist eine Verarbeitung des zurückgestreuten Radarechos in Entfernungsrichtung notwendig, um eine hohe Entfernungsauflösung zu erreichen. Diese Verarbeitung ist gemäß der Theorie des Optimalfilters definiert, wobei eine Faltung des empfangenen Signals mit der konjugiert komplexen, zeitinvertierten Replika des gesendeten, modulierten Pulses durchgeführt wird. Hierbei werden die Replika als Referenzfunktion, eine Faltungsoperation als Impulskompression und eine resultierende Funktion der Impulskompression von einem einzigen abgebildeten Punktziel als Punktzielantwort bezeichnet.

Die Azimutauflösung für ein konventionelles, inkohärentes Seitensichtradar ist durch die physikalische Antennenlänge im Flugzeug begrenzt. Die Azimutauflösung ist daher durch das Produkt aus Antennenöffnungswinkel und Entfernung zwischen Träger und Ziel gegeben. In diesem Fall ist es also nicht möglich, aus einer großen Entfernung eine Abbildung mit hoher Auflösung durchzuführen und zu erhalten.

Eine Azimutauflösung eines Radars mit synthetischer Apertur (SAR) wird sehr verbessert, wenn eine Antenne mit breitem Richtdiagramm im Azimut benutzt und eine kohärente Abbildung durchgeführt wird. In diesem Fall wird ein bestimmtes Ziel von der Antenne während mehrerer Pulse beleuchtet, und jedes Echo wird kohärent empfangen. Eine lange synthetische Antenne kann dadurch gebildet werden, daß der quadratische Phasenverlauf in Azimutrichtung korrigiert wird, welche durch die Entfernungsvariation während der Beleuchtungszeit zwischen Träger und Ziel verursacht wurde. Damit eine Phaseninformation ausgewertet werden kann, wird für das Senden und Empfangen ein kohärentes Radarsystem vorausgesetzt.

Ein quadratischer Phasenverlauf in Azimutrichtung bedeutet eine lineare Frequenzmodulation, was als Dopplerverlauf bezeichnet wird. Die gesamte Bandbreite eines Azimutsignals wird als Dopplerbandbreite bezeichnet. Um eine hohe Auflösung zu erreichen, besteht eine Verarbeitung in Azimutrichtung aus einer Faltung des Azimutsignals mit einer aus der Geometrie errechneten Referenzfunktion, was dann als Impulskompression in Azimutrichtung bezeichnet wird. Da die Zielbeleuchtungszeit in Azimutrichtung linear mit der Entfernung steigt, wird die Länge der synthetischen Apertur mit der Entfernung größer. Dies führt dazu, daß die Azimutauflösung unabhängig von der Entfernung wird.

Eine Bilddarstellung von verarbeiteten, komplexen Daten erfordert eine Betragsbildung. Hierzu werden die Signale im Iund Q-Kanal quadriert und addiert (d.h. (I+Q)); anschließend, wird hieraus die Quadratwurzel bezogen.

Falls die Entfernungsvariation während der Beleuchtungszeit des Radarsystems in Azimutrichtung größer als die halbe Auflösung in der Entfernungsrichtung ist, muß eine Zielwanderung korrigiert werden. Ein weiterer Verarbeitungsschritt ist hei der Azimutprozessierung dann notwendig, wenn der Dopplerschwerpunkt, d.h. die Frequenz in der Mitte der Dopplerbandbreite, nicht gleich null ist. In diesem Fall wird die Bandbreite der Referenzfunktion durch eine Frequenzverschiebung an die Dopplerbandbreite des Azimutsignals angepaßt.

Für eine Verringerung des multiplikativen Rauschens, welches aufgrund einer kohärenten Verarbeitung bei der Abbildung von Flächenzielen in SAR-Bildern vorhanden ist, wird eine sogenannte "Multi-Look"-Verarbeitung in der Azimutrichtung durchgeführt. (Siehe US-PS 42 92 634). Bei einer "MultiLook"-Verarbeitung wird eine inkohärente Addition von statistisch unabhängigen Bildern durchgeführt, die durch eine Unterteilung der verfügbaren Dopplerbandbreiten in einzelne "Looks" und durch die konventionelle Impulskompression erzeugt werden.

Die Standardabweichung von multiplikativem Rauschen nimmt mit der Wurzel der Anzahl von "Looks" ab, was in der Folge zu einer besseren radiometrischen Auflösung und damit zu einer besseren Bildqualität führt. Die Bildqualität eines SAR-Bildes ergibt sich durch den Kontrast, eine geometrische und radiometrische Auflösung, den Nebenzipfelabstand der Punktzielantwort und durch einen Verlust bei der Verarbeitung. Die "Looks" können sich auch überlappen, was zu einer effektiveren Ausnutzung der verfügbaren Bandbreite führt. Durch die Überlappung können dann mehr "Looks" gebildet und damit eine bessere radiometrische Auflösung erreicht werden. Daher wird üblicherweise eine Überlappung von bis zu 60% angewendet.

Falls die Geschwindigkeit des Trägers nicht konstant ist, kleine Abweichungen von der Sollbahn des Trägers vorkommen, oder die Entfernungsvariation zwischen Träger und Ziel unbekannt ist. muß eine automatische Fokussierung bei der Azimutverarbeitung durchgeführt werden, damit sich Koncrast und geometrische Auflösung in Azimutrichtung nicht verschlechtern. (Siehe EP 0 083 107 A3). Durch eine automatische Fokussierung wird dann eine optimale Referenzfunktion aus einer Analyse des Azimutsignals berechnet. Die Berechnung muß oft genug genau durchgeführt werden, damit schnelle Variationen des Bewegungsfehlers korrigiert werden können. Durch die automatische Fokussierung werden nicht nur die korrekte Fluggeschwindigkeit und deren Variationen bestimmt, sondern auch Phasenfehler, die durch horizontale und vertikale Abweichungen von der Sollbahn entstehen.

Wegen der hohen Datenrate, die üblicherweise größer als 5 Mbyte/s ist, und wegen einer aufwendigen Datenverarbeitung zur Generierung eines SAR-Bildes, die aus einer Impulskompression in der Azimut- und der Entfernungsrichtung, einer Korrektur der Zielwanderung, einer Doppler-Schwerpunktbestimmung, einer "Multi-Look"-Verarbeitung und einer automatischen Fokussierung besteht, sind häufig mehr als 10¹⁰ Operationen/s notwendig, um eine Echtzeitverarbeitung durchzuführen.

Bei üblichen SAR-Prozessoren wird eine Verarbeitung mit digitalisierten Daten durchgeführt, wozu Rechnersysteme mit Array-Prozessoren oder spezielle Hardware-Ausführungen benutzt werden. In dem US-Patent 4 132 989 (von R.A. Frosch und W.E. Arens vom Januar 1979) ist eine digitale SAR-Verarbeitung im Zeitbereich beschrieben; hierbei wird eine Zeitkorrelation eines empfangenen Signals mit einer Referenzfunktion in der Azimut- und der Entfernungsrichtung gebildet. Sobald eine Punktanzahl (P) der Referenzfunktion mehr als 32 beträgt, ist dieses Verfahren sehr aufwendig. Für jeden korrelierten Punkt sind nämlich ? komplexe Multiplikationen und (P-1) komplexe Additionen erforderlich. Auch andere Operationen, wie die Zielwanderung, werden im Zeitbereich mit einem großen Rechenaufwand durchgeführt.

Zur Zeit wird eine digitale SAR-Verarbeitung im Frequenzbereich am häufigsten angewendet (siehe.Wu, Ce.: "Digital Fast Correlation Approach to Produce SEASAT SAR Imagery", Proc. of the IEEE Int. Radar Conf., Stn. 153 bis 160 vom April 1980). Hierbei wird ein schneller fourier-transformierter (FFT-) Algorithmus für eine Impulskompression in der Entfernungs- und Azimutrichtung benutzt. Dieses Verfahren basiert darauf, daß eine Faltung im Zeitbereich gemäß dem Faltungstheorien der Fourier-Transformation einer Multiplikation im Frequenzbereich entspricht. Das empfangene Signal und die Referenzfunktion werden zuerst fourier-transformiert, dann miteinander multipliziert und schließlich durch die inverse Fourier-Transformation wieder zurück in den Zeitbereich transformiert. Diese Verarbeitung ist wesentlich schneller als die Bildung der Zeitkorrelation und ermöglicht es daher auch daß die Korrektur der Zielwanderung und der Doppler-Schwerpunktbestimmung auf effiziente Weise im Frequenzbereich durchgeführt werden können.

Ein Subaperturverfahren wird auch zur digitalen SAR-Datenverarbeitung verwendet. Dieses Verfahren basiert auf der kohärenten Addition von Subaperturen, die durch eine Aufteilung der Signalbandbreite in Azimut- und/oder Entfernungsrichtung gewonnen werden. In dem US-Patent 4 227 194 werden die Subaperturen mit angepaßter Phasenkorrektur kohärent addiert, wobei eine lineare Phasenkorrektur in jeder Subapertur durch ein rückgekoppeltes Aufsummierungsglied durchgeführt wird.

Von M. Sack (siehe Sack, M. et al: "Application of Efficient Linear FM Matched Filtering Algorithms to Synthetic Aperture Radar Processing", IEE Proc.,Vol., 132, Nr. 1, Stn. 45 bis 57 von 1985) ist ein digitales Verfahren zur SAR-Datenverarbeitung durch Frequenzanalyse beschrieben, welches als SPECAN-Verfahren bezeichnet wird. Bei diesem Verfahren wird ein empfangenes Signal mit einem frequenzmodulierten Signal gemischt, welches einen entgegengesetzten Frequenzverlauf aufweist. Eine Frequenzanalyse des Ergebnisses der Mischung wird dann mittels einer schnellen Fourier-Transformation (FFT) durchgeführt. Gegenüber dem im Frequenzbereich arbeitenden Verfahren läßt sich dieses Verfahren schneller durchführen, da nur eine schnelle Fourier-Transformation (FFT) für die Generierung eines Bildes notwendig ist. Nachteilig bei dem SPECAN-Verfahren sind der mit der Modulationsrate veränderliche Punktabstand der Bilddaten, die Unflexibilität zur Korrektur der quadratischen Zielwanderung und die verschlechterte geometrische Auflösung.

Zur Behebung der Nachteile des SPECAN-Verfahrens und zur Verbesserung der Bildqualität wurde ein sogenanntes Step Transform-Verfahren entwickelt (siehe Sack M. et al wie oben und Medina, M., Magota N.: "Implementation of a Subaperture Image Formation Technique for SAR", ISW '89, Eleventh Annual Ideas in Science and Electronics Exposition and Symposium, Editor: Christman, C., Albuquerque, NM, USA: Ideas in Science and Electronics 1989, Stn. 179 bis 186). Bei dem Step Transform-Verfahren wird das Mischungssignal in kleinere, überlappende Signale aufgeteilt, und die schnelle Fourier-Transformation wird durch zwei schnelle Fourier-Transformationen mit kleinerer Punktanzahl ersetzt. Durch die erste Fourier-Transformation werden die Subaperturen gebildet und durch die zweite Fourier-Transformation werden die Subaperturen kohärent aufsummiert.

Zur Durchführung einer Frequenzanalyse des SAR-Signals werden auch Mehrphasenfilter, sogenannte Polyphase-Filter verwendet. In der EP-Patentanmeldung 227 614 A2 ist die digitale SAR-Verarbeitung mit den Mehrphasen-Filtern eine modifizierte Version der Verarbeitung durch eine Frequenzanalyse. Zur Beschleunigung der Prozessierung können die Mehrphasen-Filter durch eine parallele Hardware realisiert werden.

Eine analoge SAR-Verarbeitung mit sogenannten SAW-Bauelementen (Surface Acoustic Wave) wird zur Zeit in vielen Radarsystemen mit einer Impulskompression in Entfernungsrichtung benutzt. Die Verarbeitung wird in der Zwischenfrequenz-(ZF-) Ebene vor der Demodulation in Quadratur ausgeführt, wobei das SAW-Bauelement die Rolle eines Verzögerungsnetzwerkes bei der Impulskompression hat. Für die analoge Impulskompression in Azimutrichtung werden ladungsgekoppelte Einrichtungen (CCD's) verwendet. Mit solchen ladungsgekoppelten Einrichtungen wird das analoge Azimutsignal im Basisband abgetastet und es wird eine Zeitkorrelation des Azimutsignals mit Hilfe einer Azimutreferenzfunktion durchgeführt.

Nachteilig bei den bekannten Verfahren zur digitalen Generierung von SAR-Bildern ist der hohe Berechnungsaufwand. Aufgrund der großen Anforderungen ist eine Echtzeit-Verarbeitung nur mit erheblichem Aufwand zu erreichen, da eine Hardware-Realisierung immer mit einer hohen Komplexität, einem hohen Leistungsverbrauch, großen Abmessungen und hohen Kosten verbunden ist. Im Fall einer analogen Verarbeitung ist der dynamische Bereich und das Signal/Rauschverhältnis auf maximal 50 dB beschränkt; obendrein ist die Flexibilität und Genauigkeit der Prozessierung reduziert.

Gemäß der Erfindung soll daher ein Verfahren zur digitalen Generierung von SAR-Bildern sowie eine Einrichtung zur Durchführung des Verfahrens geschaffen werden, bei welchen eine hohe geometrische Auflösung und eine hohe Bildqualität erreicht ist. Gemäß der Erfindung ist dies bei einem Verfahren zur digitalen Generierung von SAR-Bildern nach dem Oberbegriff des Anspruchs 1 durch die Merkmale in dessen kennzeichnenden Teil erreicht. Ferner ist dies bei einer Einrichtung zur Durchführung des Verfahrens durch die Merkmale im kennzeichnenden Teil der Ansprüche 2 und 3 erreicht.

Bei dem erfindungsgemäßen Verfahren ist eine Reduzierung des Berechnungsaufwands bei der Impulskompression in der Entfernungs- und Azimutrichtung für die Generierung eines SAR-Bildes dadurch erreicht, daß ein Subapertur-Konfiguration für die Vererbeitung angewendet wird, und eine schrittweise lineare Annäherung des Phasenverlaufs hinsichtlich der Referenzfunktion durchgeführt wird. Hierbei ist gemäß der Erfindung eine Annäherung so optimiert, daß die gleiche Bildqualität wie bei den bekannten Verfahren erzielt wird, die jedoch einen hohen Berechnungsaufwand erfordern. Gemäß der Erfindung wird bei jeder Subapertur die Kompression eines kleinen Frequenzbereichs des empfangenen Signals ausgeführt, so daß dadurch die notwendigen Operationen in jeder Subapertur sehr vereinfacht sind. Obwohl sich bei jeder Subapertur nur eine niedrige Auflösung ergibt, wird bei einer kohärenten Aufsummierung der Subaperturen eine hohe Auflösung erreicht.

Zur Beschleunigung bei der Durchführung des Verfahrens kann die Subapertur-Verarbeitung auch parallel durchgeführt werden. Außerdem können gemäß der Erfindung die Korrektur der Zielwanderung und die Bestimmung des Dopplerschwerpunkts bei der Azimutverarbeitung ohne großen Hardware-Aufwand durchgeführt werden. Die Subapertur-Konfiguration ist auch sehr flexibel bezüglich einer "Multi-Look"-Verarbeitung, weil die Anzahl der "Looks" durch eine inkohärente Kombination von Subaperturen variierbar ist, ohne daß die Verarbeitungsparameter und -einstellungen geändert werden müssen. Bei der Subapertur-Konfiguration ist auch eine automatische Fokussierung zur Korrektur des Bewegungsfehlers eines Trägers ohne weiteres möglich; hierzu wird dann ein Vergleich zwischen den Signalverläufen in den Subaperturen zur Bestimmung des Versatzes aufgrund des Bewegungsfehlers durchgeführt.

Nachfolgend wird die Erfindung anhand von bevorzugten Ausführungsformen unter Bezugnahme auf die anliegenden Zeichnungen im einzelnen erläutert. Es zeigen:
- Fig.1: ein Ausführungsbeispiel einer Einrichtung zur Durchführung des Verfahrens, wobei eine Impulskompression mittels einer "Multi-Look"-Verarbeitung mit zwei (2) "Looks" durchgeführt ist;
- Fig.2: einen Signalverlauf in verschiedenen Teilen der in Fig.1 wiedergegebenen Ausführungsform;
- Fig.3: eine schrittweise, lineare Annäherung des Phasenlaufs zur Bestimmung einer Referenzfunktion jeder Subapertur sowie einen sich dadurch ergebenden, angenäherten Frequenzverlauf und Phasenfehler, und
- Fig.4: ein Gesamt-Blockdiagramm eines SAR-Prozessores, bei welchem die Ausführungsformen gemäß Fig.1 für eine Impulskompression in Entfernungs- und Azimutrichtung verwendet ist.

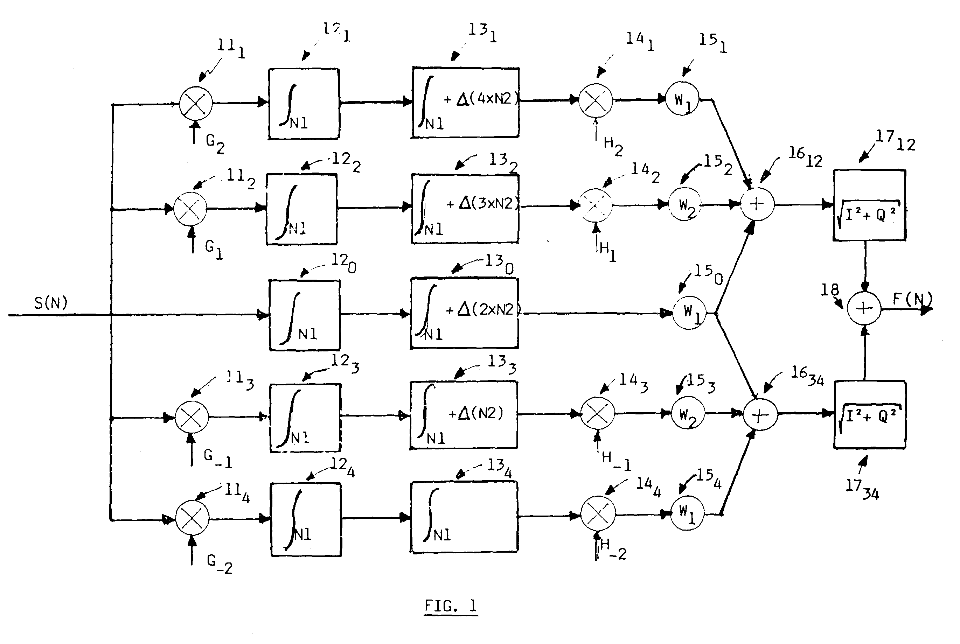

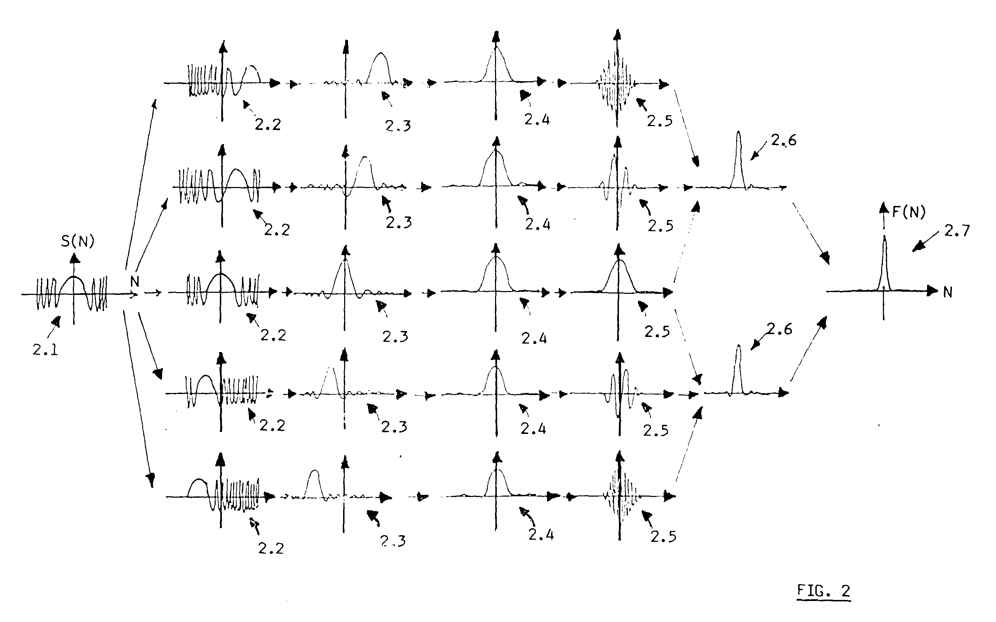

In Fig.1 ist eine bevorzugte Ausführungsform der Erfindung wiedergegeben, bei welcher aus einer Subapertur-Konfiguration eine schrittweise, lineare Annäherung eines Phasenverlaufs für eine Referenzfunktion gebildet wird. Ein Eingangssignal S(N) wird bezüglich der Entfernungs- und Azimutrichtung eingegeben, wobei N eine ganzzahlige Variable ist, die sich auf die Nummer des Abtastwertes bezieht. Der Verlauf lauf des Signals S(N) für ein Punktziel ist in Fig.2 mit 2.1 veranschaulicht, wobei jedoch nur einer der Kanäle I oder Q dargestellt ist.

In jedem einer Anzahl komplexer Multiplizierer 11₁ bis 11₄ wird das Eingangssignal S(N) mit komplexen Signalen Gᵢ multipliziert, die aus den Informationen der Frequenzmodulation des Signales S(N) berechnet werden. Der Variationsbereich von i erstreckt sich von -Aₛ bis + Aₛ, wobei (2Aₛ + 1) die Gesamtanzahl der Subaperturen s ist. In dem Ausführungsbeispiel der Fig. 1 gilt: Aₛ = 2, d.h. -2 ≤ i ≤ 2. Durch die Multiplikation in den einzelnen Multiplizierern 11₁ bis 11₄ wird der Frequenzverlauf des Eingangssignals S(N) verschoben und es werden Subaperturen erzeugt, wie in Fig.2 durch die Signalverläufe 2.2 schematisch angedeutet ist. Die Signale Gᵢ haben einen konstanten Frequenzverlauf, und der Frequenzunterschied zwischen zwei benachbarten Signalen Gᵢ für eine Mischung ist immer konstant. Für die zentrale, in Fig.1 mittig angeordnete Apertur wird keine Multipliziereinheit benötigt, da dort die Frequenzverschiebung gleich null ist.

Das komplexe Ausgangssignal jedes der Multiplizierer 11₁ bis 11₄ wird mittels nachgeordneter, einfacher Integriereinheiten 12₀ bis 12₄ gefiltert, wobei die Integriereinheiten 12₀ bis 12₄ jeweils eine Integrationslänge N₁ haben. Die Integration wird für die beiden I- und Q-Kanäle mittels einer gleitenden Mittelwertoperation gesondert durchgeführt, wobei keine Korrektur des quadratischen Phasenverlaufs erforderlich ist. Für jeden gefilterten Punkt sind somit im I- und im Q-Kanal nur jeweils eine Addition und eine Subtraktion erforderlich; hierbei wird das Ergebnis der vorherigen Integration zu dem neuesten, zu integrierenden Wert addiert und von dem ältesten Wert der Integrationsmenge subtrahiert. Hierfür ist in jeder der Integriereinheiten 12₀ bis 12₄ für die erforderliche Integrationslänge N₁ jeweils ein Speicher mit N₁ Speicherplätzen erforderlich, wobei der neueste, zu integrierende Wert über den ältesten Wert im Speicher geschrieben wird.

Aufgrund der Integration wird an der Stelle, an welcher die Frequenz gleich null ist, in jeder Subapertur ein Puls generiert, der eine niedrige Auflösung und viele hohe Nebenkeulen aufweist, wie in Fig.2 durch Kurvenverläufe 2.3 dargestellt ist. In weiteren Integriereinheiten 13₀ bis 13₄ wird eine zweite Integration ausgeführt, wodurch die Nebenkeulen stark unterdrückt werden; gleichzeitig wird auch eine Punktverschiebung der Signale vorgenommen, wie in Fig.2 durch Kurvenverläufe 2.4 veranschaulicht ist. Hierdurch liegen dann die generierten Impulse bei den einzelnen Subaperturen immer an der gleichen Stelle. Jede der weiteren Integriereinheiten 13₀ bis 13₄ weist hierfür einen Speicher mit einer Speicherkapazität von (N1 + (i+2) · N2) auf, wobei der Parameter (i + 2) N₂ der Punktanzahl der Verschiebung entspricht und -2 ≤ i ≤ 2 ist.

Da zur Bildung eines hochaufgelösten Pulses niedrig aufgelöste Pulse zusammengesetzt werden müssen, wird in den Integriereinheiten 13₀ bis 13₄ nachgeordneten Multipliziereinheiten 14₁ bis 14₄ jeweils eine konstante Frequenzverschiebung für jede Subapertur durchgeführt; hierzu werden die niedrig aufgelösten Impulse mit Signalen Hᵢ gemischt, wie in Fig.2 durch Signalverläufe 2.4 angedeutet ist. Die Frequenzverschiebung verschiebung der Signale Hᵢ ist entgegengesetzt der Frequenzverschiebung der Signale Gᵢ, und die Signale Hᵢ werden entsprechend den Signalen Gᵢ aus der Information der Frequenzmodulation von S(N) bestimmt. Durch die Multiplikation der Signale Hᵢ mit der niedrig aufgelösten Impulsantwort ist gewährleistet, daß der Phasenverlauf über den Subaperturen bei der kohärenten Aufsummierung der Subaperturen kontinuierlich ist. Diese Kontinuität des Phasenverlaufs muß gewährleistet sein, damit ein hochaufgelöster Puls bei der Aufsummierung der Subaperturen erzielt wird.

In nachgeordneten Multipliziereinheiten 15₀ bis 15₄ wird für jede Subapertur eine skalare Gewichtung Wᵢ durchgeführt, weshalb jeder hochaufgelöste Impuls nur noch niedrige Nebenkeulen aufweist, wie in Fig.2 durch Kurvenverläufe 2.5 dargestellt ist. Durch eine komplexe Addition der Subaperturen mittels zwei Addierer 16₁₂ und 16₃₄, in welchen die Ausgangssignale der Multipliziereinheiten 15₀, 15₁ und 15₂ bzw. 15₀, 15₃ und 15₄ addiert werden, erfolgt eine Synthese eines hochaufgelösten Pulses, wie in Fig.2 aus Kurvenverläufen 2.6 zu ersehen ist.

In Fig.1 ist eine "Multi-Look"-Konfiguration mit zwei (2) "Looks" dargestellt, wobei jeder "Look" durch ein Aufsummieren einer Gruppe von drei Subaperturen erzeugt wird. In nachgeordneten betragsbildenden Einheiten 17₁₂ und 17₃₄ wird dann die erforderliche Betragsbildung durchgeführt, wobei die "Looks" generiert werden. Diese "Looks" werden schließlich in einem nachgeordneten Addierer 18 aufsummiert, wodurch sich der in Fig.2 schematisch wiedergegebene Kurvenverlauf 2.7 ergibt. Das hieraus resultierende Ausgangssignal F(N) hat zwar die gleiche geometrische Auflösung wie die Pulse am Ausgang der betragsbildenden Einheiten 17₁₂ und 17₃₄, aber wegen der inkohärenten Addition der "Looks" weisen sie eine bessere radiometrische Auflösung auf.

In Fig.1 überlappen sich die "Looks" um 33%, wobei die zentrale Subapertur einen Beitrag Zur Generierung beider "Looks" liefert. Die Flexibilität dieser Struktur für eine "Multi-Look"-Verarbeitung liegt darin, daß die Anzahl an "Looks" und der Überlappungswert in einem großen Bereich frei gewählt werden können. Hierfür genügt eine neue Konfiguration der Addierer 16₁₂ und 16₃₄, der betragsbildenden Einheiten 17₁₂ und 17₃₄ sowie des nachgeordneten Addierers 18.

Die Erfindung kann jedoch auch noch auf verschiedene andere Arten realisiert werden. Für die mittels der Multipliziereinheiten 11₁ bis 11₄ und der nachgeordneten Integriereinheiten 12₀ bis 12₄ und 13₀ bis 13₄ durchgeführten Operationen kann auch ein "schneller Fourier-Transformations-"(FFT-) Algorithmus angewendet werden, wobei vor der Fourier-Transformation eine Gewichtung mit einer Dreieckfunktion eingefügt ist, d.h. vor der Fourier-Transformation von F Punkten werden diese F Punkte mit einer Dreieckfunktion mit einer gleichen Anzahl von Punkten multipliziert. Eine Fourier-Transformation kann angewendet werden, da nach einer Fourier-Transformation von F Punkten dieselbe Anzahl von Frequenzkanälen erzielt wird, wobei in jedem Frequenzkanal eine Frequenzverschiebung und eine anschließende Aufsummierung durchgeführt wird. Die Anzahl der Punkte jeder Fourier-Transformation kann hierbei so gewählt werden, daß mittels der schnellen Fourier-Transformation dieselbe Frequenzverschiebung wie mit den Multiplizierern 11₁ bis 11₄ und die gleiche Punktanzahl der Integration wie mit den Integriereinheiten 12₀ bis 12₄ und 13₀ bis 13₄ erzielt wird.

Da die durchgeführte zweimalige Integration mit jeweils N1 Punkten mit Hilfe der Integriereinheiten 12₀ bis 12₄ und 13₀ bis 13₄ einer einzigen Integration mit einer Dreieckfunktion mit 2.N1 entspricht, d.h. die Faltung zweier Rechteckfunktionen einer einzigen Faltung mit einer Dreieckfunktion doppelter Punktanzahl entspricht, können durch den FFT-Algorithmus mit einer Dreieckfunktion zur Gewichtung der Daten die numerischen Operationen der Einheiten 11₁ bis 11₄, 12₀ bis 12₄ und 13₀ bis 13₄ in Fig. 1 vollständig ersetzt werden. In ähnlicher Weise kann der FFT-Algorithmus zur Durchführung der Operationen der Multiplizierer 14₀ bis 14₄ und der Addierer 16₁₂ und 16₃₄ benutzt werden, wobei eine Gewichtung gemäß der skalaren Werte Wᵢ in Fig. 1 vor der Fourier-Transformation eingefügt wird.

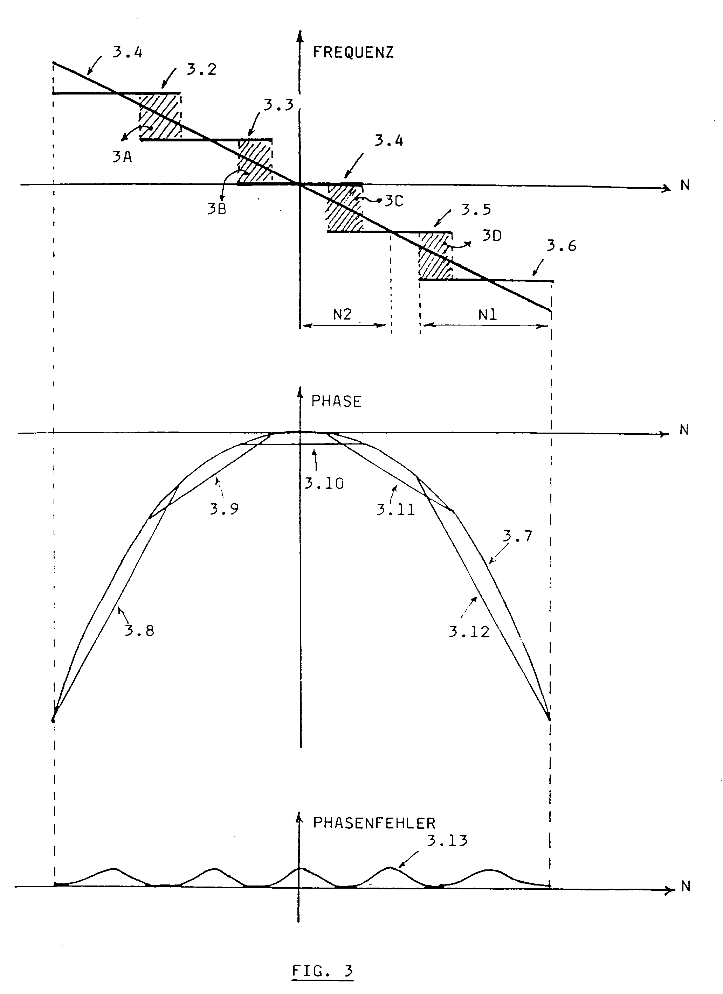

In Fig. 3 ist durch Kurven 3.1 und 3.7 ein Frequenz- und Phasenverlauf eines Punktzieles dargestellt. Durch Kurven 3.2 bis 3.6 und 3.8 bis 3.12 sind die mit der Ausführungsform in Fig.1 erreichten, entsprechenden Frequenz- und Phasenannäherungen und durch einen im unteren Teil der Fig.3 wiedergegebenen Kurvenverlauf 3.13 ist der sich aufgrund der Annäherung ergebende Phasenfehler dargestellt. Durch die Frequenzverschiebung mit Hilfe der Multiplizierer 11₁ bis 11₄ wird ein konstanter Frequenzverlauf erzeugt, welcher durch die Kurven 3.2 bis 3.6 wiedergegeben ist. Die Integrationsdauer jeder Subapertur ist mit N1 gegeben, und die Punktverschiebung zwischen den Subaperturen ist durch N2 gegeben. Der durch die Kurven 8.1 bis 8.12 wiedergegebene, angenäherte Phasenverlauf ist durch die Integration des angenäherten Frequenzverlaufs gewonnen worden. Der Unterschied zwischen dem angenäherten Phasenverlauf und dem quadratischen Phasenverlauf ergibt den dem Kurvenverlauf 3.13 entsprechenden Phasenfehler.

Der Phasenfehler führt zu den hohen Nebenkeulen bei den niedrig aufgelösten Pulsen, was in Fig.2 durch die Kurvenverläufe 2.3 angedeutet ist; diese hohen Nebenkeulen werden dann durch die mit Hilfe der Integriereinheiten 13₀ bis 13₄ durchgeführte, zweite Integration unterdrückt, wie in Fig.2 aus den Kurvenverläufen 2.4 zu ersehen ist. Die Überlappung zwischen den Subaperturen in Fig.3, welche durch schraffierte Bereiche 3A bis 3D dargestellt ist, wobei die Bereiche jeweils (N1-N2)-Punkte haben, führen zu einer weiteren Verkleinerung der Nebenzipfel der hochaufgelösten Punktzielantwort, da der daraus resultierende Phasenfehler in den Bereichen der Überlappung zwischen den Subaperturen kleiner ist. Beispielsweise ergibt sich für eine Überlappung von 21% zwischen den Subaperturen und bei einem maximalen Phasenfehler von 28° innerhalb einer Integrationszeit einer Subapertur ein Nebenkeulenabstand von 35dB, was in den meisten Fällen ausreichend ist. Bei einer Überlappung von 57% wird der Nebenkeulenabstand auf 45dB vergrößert, wodurch dann erheblich höheren Anforderungen genügt ist.

Zur Erhöhung der geometrischen Auflösung oder zur Erhöhung der Anzahl von "Looks" kann die Anzahl (2Aₛ + 1) an Subaperturen s soweit erhöht werden, bis die gesamte verfügbare Bandbreite ausgenutzt ist. Falls nur ein Teil der verfügbaren Bandbreite genutzt wird, kann eine Reduktion der Abtastung nach der zweiten Integration durchgeführt werden. In diesem Fall ist dann keine zusätzliche Filtereinheit vor der Impulskompression notwendig.

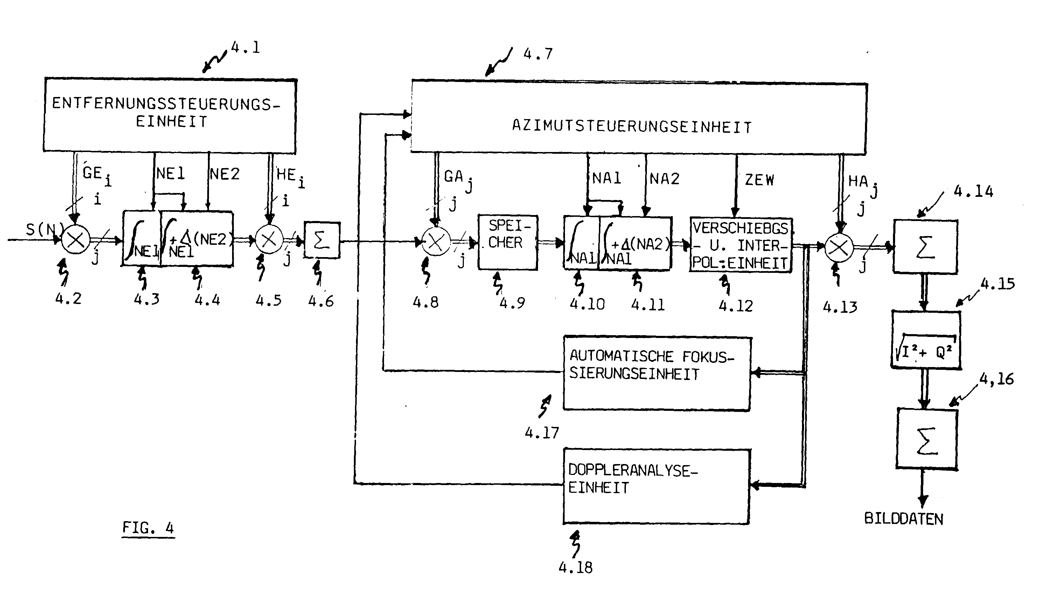

In Fig.4 ist ein Blockdiagramm eines SAR-Prozessores wiedergegeben, in welchem eine schematische Darstellung der Ausführungsform in Fig.1 für eine Impulskompression in der Entfernungs- und der Azimutrichtung verwendet ist. Bei der Impulskompression in der Entfernungsrichtung werden zuerst die Parameter der Pulsmodulation eingegeben; hierdurch wird die Anzahl i der Subaperturen wieder für die gewünschte Entfernungsauflösung, die Frequenzverschiebungen GEᵢ und HEᵢ, die Punktanzahl NE1 für die Integration und die Punktanzahl NE2 für die Verzögerung der Subaperturen durch eine Entfernungssteuerungseinheit 4.1 berechnet. Das gleiche gilt für eine Impulskompression in der Azimutrichtung, wobei die Berechnung der Anzahl j Subaperturen für die gewünschte Azimutauflösung, der Frequenzverschiebungen GAⱼ und HAⱼ der Punktanzahl NA1 für die Integration, der Punktanzahl NA2 für die Verzögerung der Subaperturen und der Koordinaten ZEW zur Korrektur der Zielwanderung durch eine Azimutsteuerungseinheit 4.7 durchgeführt wird. Diese berechneten Parameter für die Azimutverarbeitung werden mit der Zunahme der Entfernung aktualisiert, da sich der Dopplerverlauf mit der Entfernung ändert.

Die erste Verarbeitung bei der Generierung eines SAR-Bildes wird durch die Impulskompression in der Entfernungsrichtung erreicht. Die digitalisierten Werte eines jeden Impulses S(N) werden durch Multipliziereinheiten 4.2, welche den Multiplizierern 11₁ bis 11₄ in der Ausführungsform der Fig.1 entsprechen, mit den Signalen GEᵢ gemischt, durch Integriereinheiten 4.3 und 4.4, welche den Integriereinheiten 12₀ bis 12₄ in der Ausführungsform der Fig. 1 entsprechen, mit einer Integrationslänge von NE1 Punkten gefiltert, anschließend durch eine Einheit 4.4, welche in der Ausführungsform der Fig.1 den Einheiten 13₀ bis 13₄ entspricht, noch einmal gefiltert und dann verzögert, wobei die relative Verzögerung zwischen zwei benachbarten Subaperturen NA2 Punkte beträgt und schließlich durch eine Multipliziereinheit 4.5, welche in der Ausführungsform der Fig.1 den Multipliziereinheiten 14₁ bis 14₄ entspricht, mit dem Signal HEᵢ gemischt und dann in einem Addierer 4.6, welcher in der Ausführungsform der Fig.1 den Addierern 16₁₂ bis 16₃₄ entspricht, kohärent aufsummiert. In dem Addierer 4.6 wird zusätzlich eine skalare Gewichtung entsprechend der Wichtung in den Einheiten 15₀ bis 15₄ der Ausführungsform der Fig. 1 für jede Subapertur eingefügt, damit die Nebenkeulen der Punktzielantwort unterdrückt werden.

Das Ergebnis der Impulskompression in der Entfernungsrichtung wird durch eine Multipliziereinheit 4.8, die ebenfalls wieder den Multiplizierern 11₁ bis 11₄ in Fig.1 entspricht, mit den Signalen GAⱼ gemischt. Jedes Radarecho besteht hierbei aus T Entfernungstoren, wobei sich die Anzahl der Entfernungstore durch die Anzahl der Abtastwerte bei der Digitalisierung eines jeden Radarechos ergibt. Die erforderliche Größe eines nachgeordneten Speichers 4.9 für jede Subapertur ergibt sich dann dadurch, daß die Anzahl der Entfernungstore T mit der Punktanzahl NA1 der Integration multipliziert wird, wobei die Integration mittels einer Integriereinheit 4.10, die den Integriereinheiten 12₀ bis 12₄ von Fig.1 entspricht, durchgeführt wird. Beim Schreiben eines Radarechos werden in dem Speicher 4.9 jeder Subapertur sequentiell alle Entfernungstore adressiert und gespeichert. Dann werden die Daten der Integriereinheit 4.10 bei jedem Entfernungstor, sequentiell adressiert, in Azimutrichtung gelesen. Dadurch wird der Zugriff in Azimutrichtung für die nächsten Verarbeitungsschritte ermöglicht. Die Integriereinheit 4.10 führt eine Integration mit NA1 Punkten durch. Die Subaperturen werden dann durch eine nachgeordnete Integrations- und Verzögerungseinheit 4.11, welche den Einheiten 13₁ bis 13₄ in Fig.1 entspricht, noch einmal mit NA1 Punkten gefiltert und dann mit einer relativen Verschiebung von NA2 Punkten verzögert. Die Korrektur der Zielwanderung mittels einer Verschiebungs- und Interpolationseinheit 4.12 wird effektiv vor der Synthese der Subaperturen durch eine Verschiebung der Daten in der Entfernungsrichtung durchgeführt. Falls die Verschiebung eine gebrochene Zahl ist, wird eine Interpolation durchgeführt, um die Genauigkeit der Korrektur zu erhöhen. Parameter ZEW zur Korrektur der Zielwanderung werden mittels einer Azimut-Steuereinheit 4.7 berechnet und müssen ebenfalls mit zunehmender Entfernung aktualisiert werden.

Vor einer Synthese der Subaperturen wird noch eine automatische Fokussierung und eine Bestimmung des Dopplerschwerpunktes durchgeführt. Bei der automatischen Fokussierung in einer Fokussiereinheit 4.17 werden die Beträge der Subaperturen miteinander korreliert und das Maximum der Korrelation wird bestimmt. Das Maximum gibt an, ob die Positionierung jeder Subapertur relativ zu der anderen stimmt, wie durch den Kurvenverlauf 2.4 in Fig.2 gezeigt ist, oder ob die Verschiebung der Subaperturen zur Korrektur des Bewegungsfehlers notwendig ist. Falls die Positionierung richtig ist, stimmen die berechneten Parameter für die Impulskompression mit der Eingabe bei der Azimutsteuereinheit 4.7 überein.

Falls eine Verschiebung zur Übereinstimmung der Positionierung der Subaperturen notwendig ist, gibt die automatische Fokussiereinheit 4.17 die Information bezüglich der Verschiebung an die Azimutsteuereinheit 4.7, in welcher dann die neuen Parameter für die Impulskompression in Azimutrichtung berechnet werden.

Mittels einer Doppleranalyse-Einheit 4.18, welche den Dopplerschwerpunkt bestimmt, wird dann zuerst die mittlere Leistung einer bestimmten Punktanzahl bei jeder Subapertur berechnet. Da in jeder Subapertur die Filterung eines Frequenzbereichs des Dopplerverlaufs durchgeführt wird, entspricht das Maximum der Leistung dem zentralen Bereich des Antennenrichtdiagramms in der Azimutrichtung. Dieser Bereich entspricht auch dem Dopplerschwerpunkt. Durch eine Interpolation zwischen berechneten Werten, d.h. die mittlere Leistung in jeder Subapertur, wird die Genauigkeit der Bestimmung des Dopplerschwerpunkts erhöht, da die Frequenz-Quantisierungsstufen durch die Interpolation kleiner werden.

Anschließend wird jede Subapertur durch eine nachgeordnete Multipliziereinheit 4.13 mit den Signalen HAⱼ gemischt, und eine Synthese durch eine kohärente Aufsummierung wird in einer Summiereinheit 4.14 durchgeführt. Der Betrag eines jeden "Looks" wird durch eine betragbildende Einheit 4.15 gebildet, welche den betragbildenden Einheiten 17₁₂ und 17₃₄ der Ausführungsformen in Fig.1 entsprechen. Die "Looks" werden dann in einer Addiereinheit 4.16, welche der Addiereinheit 18 in der Ausführungsform der Fig.1 entspricht, inkohärent aufsummiert. An dieser Stelle sind dann Bilddaten mit hoher Auflösung und hoher Qualität generiert.

Bei Beleuchtungsgeometrien mit hohem Driftwinkel kann der Phasenverlauf im Azimut eines Punktzieles einen kubischen Anteil enthalten. Die Subapertur-Konfiguration gemäß der Erfindung ermöglicht es, daß der Phasenverlauf jeder Subapertur in einem linearen Verlauf angenähert ist und die gleiche Konfiguration trotz des kubischen Anteils für die Impulskompression benutzt wird. Gleichzeitig ist dadurch die Berechnung der Signalverläufe GAᵢ und HAᵢ vereinfacht, welche nur lineare Phasenanteile haben.

## Patentansprüche

1. Verfahren zur digitalen Generierung von mittels eines von einem Träger mitgeführten, kohärenten Abbildungssystems erhaltenen SAR-Bildern, wobei eine Impulskompression in Azimut- oder Entfernungsrichtung mit hoher Auflösung durch eine kohärente Aufsummierung von Subaperturen erreicht wird, **dadurch gekennzeichnet**,
a) daß eine schrittweise, lineare Phasenannäherung (3.8 bis 3.12; Fig.3) zur Korrektur des quadratischen Phasenverlaufs des SAR-Signals in Azimut- oder Entfernungsrichtung durchgeführt wird,
b) daß zur Optimierung der Phasenannäherung eine Frequenzüberlappung (3A bis 3D; Fig.3) der Subaperturen durchgeführt wird;
c) daß die einzelnen Subaperturen mittels des gleitenden Mittelwertverfahrens (12₀ bis 12₄; 13₀ bis 13₄; Fig.3) zur Reduktion der Nebenzipfel der niedrig aufgelösten Impulsantwort zweifach integriert werden, und
d) daß zur Bildung (11₁ bis 11₄; Fig.2) und zur Synthese (14₁ bis 14₄; Fig.2) der Subaperturen komplexe Multiplikationen mit signalkonstanter Frequenz vorgenommen werden, so daß das Signal jeder Subapertur in der Frequenz verschoben wird.

2. Einrichtung zur digitalen Generierung von mittels eines von einem Träger mitgeführten, kohärenten Abbildungssystems erhaltenen SAR-Bildern, wobei eine Impulskompression in Azimut- oder Entfernungsrichtung mit hoher Auflösung durch eine kohärente Aufsummierung von Subaperturen erreicht wird, **dadurch** **gekennzeichnet**, daß zur Impulskompression in der Azimut- oder Entfernungsrichtung vorgesehen sind:
parallel geschaltete Multipliziereinheiten (11₁ bis 11₄), in denen ein empfangenes, digitalisiertes SAR-Signal (S(N)) mit komplexen Signalen (Gᵢ) multipliziert wird, wobei i sich von -A_{S} bis +A_{S} erstreckt und (2A_{S} + 1) die Gesamtanzahl an Subaperturen s ist;
Integriereinheiten (12₀ bis 12₄) mit Speichern, in denen die Ausgangssignale der Multipliziereinzeiten (11₁ bis 11₄) dadurch gefiltert werden, daß in jedem Speicher der Integriereinheiten ein gerade integrierter Wert den ältesten, gespeicherten Wert überschreibt;
weitere Integriereinheiten (13₀ bis 13₄), in denen zur Unterdrückung von Nebenkeulen und zur gleichzeitigen Signalverzögerung eine zweite Integration durchgeführt wird;
weitere Multipliziereinheiten (14₁ bis 14₄), in denen die Ausgangssignale der weiteren Integriereinheiten (13₀ bis 13₄) mit komplexen Signalen (Hᵢ) multipliziert und gewichtet werden, die aus der Information der Frequenzmodulation des Eingangssignals vorher abgespeichert worden sind, und
nachgeordnete Addierer (16₁₂, 16₃₄), in denen die gewichteten Signale einer Anzahl von Subaperturen aufsummiert und nach Durchlaufen von betragbildenden Einheiten (17₁₂, 17₃₄) in einem weiteren Addierer (18) zu einem Ausgangssignal (F(N)) mit einer höheren, radiometrischen Auflösung zusammengefaßt werden.

3. Einrichtung zur digitalen Generierung von mittels eines von einem Träger mitgeführten, kohärenten Abbildungssystems erhaltenen SAR-Bildern, wobei eine Impulskompression in Azimut- und Entfernungsrichtung mit hoher Auflösung durch eine kohärente Aufsummierung von Subaperturen erreicht wird, **dadurch gekennzeichnet,**
daß zur Impulskompression in Entfernungsrichtung vorgesehen sind:
eine Entfernungssteuereinheit (4.1) zur Bestimmung von benötigten Parametern, wie Frequenzverschiebungen (GEᵢ, HEᵢ), einer Punktanzahl (NE1) für eine Integration in der Entfernungsrichtung und einer Punktanzahl (NE2) für eine Verzögerung der Subaperturen;
eine Multipliziereinheit (4.2), in der digitalisierte, empfangene SAR-Daten (S(N)) eines jeden Radarechos mit den Frequenzverschiebungssignalen (GEᵢ) gemischt werden;
eine der ersten Multipliziereinheit (4.2) nachgeschaltete, erste Integriereinheit (4.3) zur Filterung mit einer Integrationslänge entsprechend der ersten Punktanzahl (NE1), welcher eine der nochmaligen Filterung dienende, zweite Integriereinheit (4.4) nachgeordnet ist, durch welche die einzelnen Subaperturen mit jeweils der zweiten Punktanzahl relativ verzögert werden;
eine zweite Multipliziereinheit (4.5), in der die Ausgangsdaten der zweiten Integriereinheit (4.4) mit zweiten Frequenzverschiebungssignalen von der Entfernungssteuereinheit (4.1) gemischt werden, und
eine der zweiten Multipliziereinheit (4.5) nachgeschaltete Addiereinheit (4.6) zur kohärenten Aufsummierung der Subaperturen, und
daß zur Impulskompression in Azimutrichtung vorgesehen sind:
eine Azimutsteuereinheit (4.7) zur Bestimmung von Parametern, wie dritten und vierten Frequenzverschiebungen einer dritten Punktanzahl (NA1) für eine Integration in der Azimutrichtung, einer vierten Punktanzahl (NA2) für eine Verzögerung der Subaperturen und von Verschiebungs- und Interpolationswerten zur Korrektur der Zielwanderung, und
eine dritte Multipliziereinheit (4.8), in welcher die bei der Impulskompression in Entfernungsrichtung erzeugten Ausgangsdaten mit dritten Frequenzverschiebungssignalen (GAⱼ) der Azimutsteuereinheit (4.7) gemischt werden;
ein Speicher (4.9), in welchem die Ausgangssignale der dritten Multipliziereinheit (4.8) sequentiell in Entfernungsrichtung geschrieben und dann in Azimutrichtung gelesen werden;
eine dem Speicher (4.9) nachgeordnete, dritte Integriereinheit (4.10) zur Filterung mit einer Integrationslänge entsprechend der dritten Punktanzahl (NA1), welcher zur nochmaligen Filterung eine vierte Integriereinheit (4.11) nachgeschaltet ist, durch welche die einzelnen Subaperturen einer relativen Verzögerung mit der vierten Punktanzahl unterzogen werden;
eine der vierten Integriereinheit (4.11) nachgeordnete Verschiebungs- und Interpolationseinheit (4.12), in welcher eine von der Azimutsteuereinheit (4.7) angelegte Zielentfernungswanderung (ZEW) bei der Azimutverarbeitung korrigiert wird;
eine mit dem Ausgang der Verschiebungs- und Interpolationseinheit (4.12) verbundene Fokussiereinheit (4,17) zur automatischen Fokussierung der Bilddaten;
eine ebenfalls mit dem Ausgang der Verschiebungs- und Interpolationseinheit (4.12) verbundene Doppler-Analyseeinheit (4.18) zur Bestimmung des Dopplerschwerpunktes, wobei die Ausgangssignale der Fokussiereinheit (4.17) und der Doppler-Analyseeinheit (4.18) gesondert an die Azimut-steuereinheit (4.7) rückgeführt werden;
eine der Verschiebungs- und Interpolationseinheit (4.12) nachgeordnete, vierte Multipliziereinheit (4.13), in welcher die Subaperturen mit vierten Frequenzverschiebungssignalen (HAⱼ) der Azimutsteuereinheit (4.7) gemischt werden;
eine der vierten Multipliziereinheit (4.13) nachgeordnete, zweite Addiereinheit (4.14), in welcher durch eine kohärente Aufsummierung eine Synthese der Subaperturen durchgeführt wird;
eine der zweiten Summiereinheit (4.14) nachgeschaltete, betragbildende Einheit (4.15), in welcher der Betrag eines jeden Looks gebildet wird, und
eine der betragsbildenden Einheit (4,15) nachgeordnete, dritte Addiereinheit (4.16), in welcher "Looks" inkohärent aufsummiert werden,
so daß
a) eine Multiplikation in der zweiten und vierten Multipliziereinheit (4.5, 4.13) der zweiten und vierten Frequenzverschiebungssignale (HEᵢ und HAᵢ) mit der niedrig aufgelösten Impulsantwort in der Weise durchgeführt wird, daß der Phasenverlauf über den Subaperturen bei der kohärenten Aufsummierung in der ersten bzw. zweiten Addiereinheit (4.6, 4.14) der Subaperturen kontinuierlich ist,
b) eine Frequenzüberlappung der Subaperturen zur Optimierung der Phasenannäherung durch die Multiplikation der ersten und dritten Frequenzverschiebungssignale (GEᵢ und GAⱼ) mit den empfangenen SAR-Daten erfolgt;
c) mit Hilfe der ersten und dritten Integriereinheit (4.3 und 4.19) eine gleitende Mittelwertoperation durchgeführt wird, und
d) in der zweiten und vierten Multipliziereinheit (4.5 und 4.13) zur Bildung und zur Synthese der Subaperturen komplexe Multiplikationen mit signalkonstanter Frequenz durchgeführt werden.

## Claims

1. A method for digital generation of SAR images obtained by means of a coherent imaging system carried by a carrier, a pulse compression being obtained in the azimuth or range direction with high resolution by a coherent summation of subapertures, **characterized in**
a) that an stepwise linear phase approximation (3.8 to 3.12; Fig.3) is carried out for correction of the quadratic phase characteristic of the SAR signals in the azimuth or range direction;
b) that for optimizing the phase approximation a frequency overlapping (3A to 3D; Fig.3) of the subapertures is effected;
c) that the individual subapertures are integrated twice by means of the moving average method (12₀ to 12₄; 13₀ to 13₄; Fig.3) for reducing the sidelobes of the low resolution pulse response, and
d) that for formation (11₁ to 11₄; Fig.2) and synthesis (14₁ to 14₄; Fig.2) of the subapertures, complex multiplications by signals-constant frequency are carried out, so that the signal of each subaperture is shifted in frequency.

2. Means for digital generation of SAR images obtained by means of a coherent imaging system carried by a carrier, a pulse compression being obtained in the azimuth or range direction with high resolution by a coherent summation of subapertures, **characterized in**
that for the pulse compression in the azimuth or range direction are provided:
parallel connected multiplying units (11₁ to 11₄) in which a received digitized SAR signal (S(N)) is multiplied by complex signals (Gᵢ), i extending from -Aₛ to +Aₛ and (2A_{S} + 1) being the total number of subapertures s;
integrating units (12₀ to 12₄) with memories in which the output signals of the multiplying units (11₁ to 11₄) are filtered in such a way that in each memory of the integrating units a value just integrated is written over the oldest stored value;
further integrating units (13₀ to 13₄) in which for suppressing sidelobes and for simultaneous signal delay a second integration is carried out;
further multiplying units (14₁ to 14₄) in which the output signals of the further integrating units (13₀ to 13₄) are multiplied by complex signals (Hᵢ) and weighted said signals having been obtained previously from the information of the frequency modulation of the input signal, and
following adders (16₁₂, 16₃₄) in which the weighted signals of a number of subapertures are summated and after passing through amount-forming units (17₁₂, 17₃₄) are combined in a further adder (18) to give an output signal (F(N)) with a higher radiometric resolution.

3. Means for digital generation of SAR images obtained by means of a coherent imaging system carried by a carrier, a signal compression being obtained in the azimuth and range direction with high resolution by a coherent summation of subapertures, **characterized in**
that for the pulse compression in the range direction are provided:
a range control unit (4.1) for determining required parameters, such as frequency shifts (GEᵢ, HEᵢ), a number of points (NE1) for integration in the range direction and a number of points (NE2) for a delay of the subapertures;
a multiplying unit (4.2) in which digitized received SAR data (S(N)) of each radar echo are mixed with the frequency shift signals (GEᵢ);
a first integrating unit (4.3) following the first multiplying unit (4.2) for filtering with an integration length corresponding to the number of points (NE1) which is followed by a second integrating unit (4.4) which serves for another filtering and by which integrating unit the individual subapertures each with the second number of points (NE2) are relatively delayed;
a second multiplying unit (4.5) in which the output data of the second integrating unit (4.4) are mixed with the second frequency shift signals by the azimuth control unit (4.1), and
a fist adding unit (4.6) following the second multiplying unit (4.5) for coherent summation of the subapertures, and
that for the pulse compression in the azimuth direction are provided:
an azimuth control unit (4.7) for determining parameters, such as third and fourth frequency shifts of a third number of points (NA1) for an integration in the azimuth direction, a fourth number of points (NA2) for a delay of the subapertures and of shift and interpolation values for correction of the range migration, and
a third multiplying unit (4.8) in which the output data generated in the pulse compression in the range direction are mixed with the third frequency shift signals (GAⱼ) of the azimuth control unit (4.7);
a memory (4.9) in which the output signals of the third multiplying unit (4.8) are written sequentially in the range direction and then read in the azimuth direction;
a third integrating unit (4.10) following the memory (4.9) for filtering with an integration length corresponding to the third number of points (NA1) which, for a further filtering, is followed by a fourth integrating unit (4.11) by which the individual subapertures are subjected to a relative delay by the fourth number of points (NA2);
a shift and interpolation unit (4.12) which follows the fourth integrating unit (4.11) and in which a range migration (ZEW) configured by the azimuth control unit (4.7) is corrected in the azimuth processing;
a focussing unit (4.17) connected to the output of the shift and interpolation unit (4.12) for automatic focussing of the image data;
a Doppler analysis unit (4.18) likewise connected to the output of the shift and interpolation unit (4.12) for determining the Doppler centroid, the output signals of the focussing unit (4.17) and of the Doppler analysis unit (4.18) being fed back separately to the azimuth control unit (4.7);
a fourth multiplying unit (4.13) which follows the shift and interpolation unit (4.12) and in which the subapertures are mixed with fourth frequency shift signals (HAⱼ) of the azimuth control unit (4.7);
a second adding unit (4.14) which follows the fourth multiplying unit (4.13) and in which a synthesis of the subapertures is carried out by a coherent summation;
an amount-forming unit (4.15) which follows the second adding unit (4.14) and in which the amount of each look is formed, and
a third adding unit (4.16) which follows the amount-forming unit (4.15) and in which the looks are incoherently summated,
so that
a) in the second and fourth multiplying units (4.5, 4.13) the second and fourth frequency shift signals (HEᵢ and HAᵢ) are multiplied with the low resolution pulse response in such a way that the phase characteristic over the subapertures is continuous on coherent summation in the first and second summation units (4.6, 4.14) respectively;
b) for optimizing the phase approximation a frequency overlapping of the subapertures is obtained by the multiplication of the first and second frequency shift signals (GEᵢ and GAⱼ) with the received SAR data;
c) with the aid of the first and third integrating units (4.3 and 4.19) a moving average operation is carried out, and
d) in the second and fourth multiplication unit (4.5 and 4.13) for formation and synthesis of the subapertures, complex multiplications are carried out by signals-constant frequency.

## Revendications

1. Procédé pour générer de manière numérique des images-SAR obtenues par un système de duplication cohérent entraîné par un support, une compression d'impulsion, dans le sens de l'azimut ou dans le sens de la distance, à haute résolution, étant obtenue par une addition cohérente des sous-ouvertures, caractérisé en ce que
a) une convergence de phases (3.8 à 3.12 ; fig. 3) linéaire, progressive est effectuée pour corriger l'évolution quadratique des phases du signal-SAR dans le sens de l'azimut ou dans le sens de la distance,
b) un chevauchement des fréquences (3A à 3D ; fig. 3) des sous-ouvertures est effectué pour optimiser la convergence des phases,
c) chaque sous-ouverture est intégrée deux fois à l'aide du procédé de la valeur moyenne à échelle mobile (12₀ à 12₄ ; 13₀ à 13₄ ; fig. 3) pour réduire le lobe secondaire de la réponse de l'impulsion à faible résolution, et
d) des multiplications complexes avec une fréquence constante du signal sont effectuées pour la génération (11₁ à 11₄ fig. 2) et pour la synthèse (14₁ à 14₄ ; fig. 2) des sous-ouvertures, de manière à décaler le signal de chaque sous-ouverture dans la fréquence.

2. Procédé pour générer de manière numérique des images-SAR obtenues par un système de duplication cohérent entraîné par un support, une compression d'impulsion, dans le sens de l'azimut ou dans le sens de la distance, à haute résolution, étant obtenue par une addition cohérente des sous-ouvertures, caractérisé en ce que, pour la compression d'impulsion dans le sens de l'azimut ou dans le sens de la distance, il est prévu de monter :
des unités de multiplication (11₁ à 11₄) en montage parallèle, dans lesquelles un signal-SAR (S (N)) reçu numérisé est multiplié avec des signaux complexes. (Gᵢ), i s'étendant de -A_{S} à +A_{S} et (2A_{S} + 1) étant le nombre total de sous-ouvertures s ;
des unités d'intégration (12₀ à 12₄) avec mémoires, destinées à filtrer les signaux de sortie des unités de multiplication (11₁ à 11₄), du fait que la valeur ancienne stockée dans la mémoire de chaque unité d'intégration est écrasée par une valeur intégrée actuelle ;
d'autres unités d'intégration (13₀ à 13₄), destinées à effectuer une deuxième intégration pour supprimer les lobes secondaires et pour effectuer simultanément un balayage déclenché retardé ;
d'autres unités de multiplication (14₁ à 14₄), dans lesquelles les signaux de sortie des autres unités d'intégration (13₀ à 13₄) sont multipliés et pondérés avec des signaux complexes (Hᵢ), qui ont été stockés précédemment à partir de l'information de la modulation de fréquence du signal d'entrée, et
des unités d'addition (16₁₂, 16₃₄) montées en aval, destinées à additionner les signaux pondérés d'un nombre de sous-ouvertures et à les coordonner, après leur passage dans des unités générant les totaux (17₁₂, 17₃₄), dans une autre unité d'addition (18) pour générer un signal de sortie (F(N)) à haute résolution radiométrique.

3. Dispositif pour générer de manière numérique des images-SAR obtenues par un système de duplication cohérent entraîné par un support, une compression d'impulsion, dans le sens de l'azimut ou dans le sens de la distance, à haute résolution, étant obtenue par une addition ( cohérente des sous-ouvertures, caractérisé en ce que
la compression d'impulsion dans le sens de la distance est réalisée dans les unités suivantes :
une unité de commande de la distance (4.1) destinée à déterminer les paramètres nécessaires, tels que des glissements de fréquence (GEᵢ, HEᵢ), d'un nombre de points (NE1) pour une intégration dans le sens de la distance et d'un nombre de points (NE2) pour une temporisation des sous-ouvertures ;
une unité de multiplication (4.2), destinée à mixer les données-SAR (S(N)) reçues numérisées de chaque écho radar avec les signaux de glissement de fréquence (GEᵢ) ;
une première unité d'intégration (4.3), montée en aval de la première unité de multiplication (4.2), destinée à filtrer le premier nombre de points (NE1) en fonction d'une longueur d'intégration, laquelle est suivie d'une deuxième unité d'intégration (4.4), utilisée pour un nouveau filtrage, par laquelle chaque sous-ouverture est temporisée relativement avec le deuxième nombre de points ;
une deuxième unité de multiplication (4.5), destinée à mixer les données de sortie de la deuxième unité d'intégration (4.4) avec des deuxièmes signaux de glissement de fréquence de l'unité de commande de la distance (4.1), et
une unité d'addition (4.6), montée en aval de la deuxième unité de multiplication (4.5), pour l'addition cohérente des sous-ouvertures, et
en ce que la compression d'impulsion dans le sens de l'azimut est réalisée dans les unités suivantes :
une unité de commande de l'azimut (4.7) destinée à déterminer les paramètres, tels que les troisièmes et quatrièmes glissements de fréquence d'un troisième nombre de points (NA1) pour une intégration dans le sens de l'azimut, d'un quatrième nombre de points (NA2) pour un décalage des sous-ouvertures, et à déterminer les valeurs de glissement et les valeurs d'interpolation pour corriger la migration de la cible, et
une troisième unité de multiplication (4.8), destinée à mixer les données de sortie, générées lors de la compression d'impulsion dans le sens de la distance, avec les troisièmes signaux de glissement de fréquence (GAⱼ) de l'unité de commande de l'azimut (4.7);
une mémoire (4.9), dans laquelle les signaux de sortie de la troisième unité de multiplication (4.8) sont écrits séquentiellement dans le sens de la distance et sont lus ensuite dans le sens de l'azimut ;
une troisième unité d'intégration (4.10), montée en aval de la mémoire (4.9), destinée à filtrer le troisième nombre de points (NA1) en fonction d'une longueur d'intégration, laquelle est suivie d'une quatrième unité d'intégration (4.11) utilisée pour un nouveau filtrage, par laquelle chaque sous-ouverture est soumise à une temporisation relative avec le quatrième nombre de points ;
une unité de glissement et d'interpolation (4.12), montée en aval de la quatrième unité d'intégration (4.11), destinée à corriger par le traitement de l'azimut une migration à distance de la cible (ZEW), établie par l'unité de commande de l'azimut (4.7) ;
une unité de focalisation (4.17) qui communique avec la sortie de l'unité de glissement et d'interpolation (4,12), destinée à focaliser automatiquement les données d'image ;
une unité d'analyse Doppler (4.18), qui communique écalement avec la sortie de l'unité de glissement et d'interpolation (4.12), destinée à déterminer le centre de gravité Doppler, les signaux de sortie de l'unité de focalisation (4.17) et de l'unité d'analyse Doppler (4.18) étant renvoyés séparément à l'unité de commande de l'azimut (4.7) ;
une quatrième unité de multiplication (4.13), montée en aval de l'unité de glissement et d'interpolation (4,12), destinée à mixer les sous-ouvertures avec les signaux de glissement de fréquence (HAⱼ) de l'unité de commande de l'azimut (4.7) ;
une deuxième unité d'addition (4.14), montée en aval de la quatrième unité de multiplication (4.13), destinée effectuer la synthèse des sous-ouvertures par une addition cohérente ;
une unité générant les totaux (4.15), montée en aval de la deuxième unité d'addition (4.14), destinée à générer le montant de chaque "look", et
une troisième unité d'addition (4.16), montée en aval de l'unité générant le total (4.15), dans laquelle est effectuée l'addition incohérente des "looks", de telle sorte que
a) une multiplication dans les deuxième et quatrième unités de multiplication (4.5, 4.13) des deuxièmes et quatrièmes signaux de glissement de fréquence (HEᵢ et HAᵢ) avec la réponse de l'impulsion à faible résolution est exécutée de manière à obtenir une évolution continue des phases au-dessus des sous-ouvertures pendant l'addition cohérente dans les première et deuxième unités d'addition (4.6, 4.14) des sous-ouvertures ;
b) un chevauchement des fréquences des sous-ouvertures en résulte pour optimiser la convergence des phases par la multiplication des premiers et des troisièmes signaux de glissement de phase (GEᵢ et GAⱼ) avec les données-SAR reçues ;
c) les première et troisième unités d'intégration (4.3 et 4.19) permettent d'effectuer une opération de la valeur moyenne à échelle mobile, et
d) les deuxième et quatrième unités de multiplication (4.5 et 4.13) permettent d'effectuer des multiplications complexes avec une fréquence de signaux constante, pour la génération et la synthèse des sous-ouvertures.
